# EUROPEAN PATENT APPLICATION

(11) **EP 1 749 800 A1**
(43) Date of publication of application: **07.02.2007**
(21) Application number: 05737187.4
(22) Date of filing: 28.04.2005
(51) Int. Cl.: C03B 23/203, H01J 9/26

(54) **METHOD AND DEVICE FOR MANUFACTURING GLASS FRAME AND METHOD OF JOINING BAND-LIKE GLASS PANE**

(30) Priority: 10.05.2004 JP 2004140053; 10.05.2004 JP 2004140054
(71) Applicant: KABUSHIKI KAISHA TOSHIBA, Tokyo 105-8001 (JP)
(72) Inventor: HASHIMOTO, Tokuo, Minato-ku Tokyo 105-8001 (JP); NEMOTO, Masahiro, Minato-ku Tokyo 105-8001 (JP); NAKAJIMA, Yukio, Minato-ku Tokyo 105-8001 (JP); WADA, Hiroyuki, Minato-ku Tokyo 105-8001 (JP)
(74) Representative: HOFFMANN EITLE
(86) International application number: PCT/JP2005/008201
(87) International publication number: WO 2005/108318

(57) **Abstract**

An apparatus for manufacturing a glass frame, comprises a mold (21) having a rectangular frame-shaped storage recess (23) in which both end portions of a plurality of strip-like glass plates (31) and (32) are stored such that they are overlapped, coil heaters (24) which simultaneously heat and melt the end portions of the plurality of strip-like glass plates (31) and (32) stored in the storage recess (23) of the mold (21), and a pressing unit (22) which simultaneously presses the end portions of the plurality of strip-like glass plates (31) and (32) molten by the coil heaters (24) such that the resultant has a thickness equal to that of the strip-like glass plates.

## Description

### Technical Field

The present invention relates to a method and apparatus for manufacturing a glass frame which is applied to side walls of a display device such as a surface-conduction electron-emitter display (SED), and a method for bonding strip-like glass plates.

### Background Art

Glass thin plates have been used for cover glass, spacers, gap plates, and the like of various types of electronic devices. When a double-layered glass product having corners, such as paired glass, is assembled, a rectangular glass frame formed with, for example, strip-like glass plates must be provided as a spacer between two opposed thin glass plates. In order that those double-layered glass products keep their vacuum airtightness, it is required that the frame-like spacer is free from warpage and wrinkles, and further has high flatness.

In a case where the glass frame is relatively small, it is possible to manufacture the glass frame by directly press molding molten glass or directly cutting out an intended glass frame from a large thin glass. In a case where the glass frame is large, however, it is difficult to manufacture it by using those methods from technical and cost points of view.

The glass frame may be manufactured by bending a long strip-like thin glass plate and bonding the end portions of the glass plate. With recent advancement of, for example, a redrawing method (thermal drawing method), the long strip-like thin glass plate serving as a maternal of the glass frame is stable and high in product quality.

To manufacture a glass frame by using long strip-like thin glass plate, the strip-like thin glass plate may be bent at a right angle by heating and melting the long the thin glass plate at four or three positions in a state that its flatness is kept. In this case, after continuous bending is performed, the end portions of the strip-like thin glass plate must be integrally molten at least at one position. Because of this, it is very difficult to entirely uniform a thickness of the glass frame, including the individual bending molded parts, with high precision, and to produce the product having high flatness. The number of manufacturing process steps is large, and the cost reduction by the automating of the manufacturing process is also difficult.

To cope with this, there is a proposal as disclosed in Jpn. Pat. Appln. KOKAI Publication No. 2002-265776 in which a plurality of strip-like thin glass plates cut out to have equal lengths are held on a same vertical plane in a frame form, and the end portions of them are overlapped, and heated and molten to be joined or bonded together.

### Disclosure of Invention

However, the approach is disadvantageous in that the structure is complicated and the cost to manufacture is high. The reason for this follows. A holding member to vertically hold a plurality of strip-like thin glass plates assembled in a frame form is rotatably provided, the holding member is rotated to successively feed the corners of the frame-shaped and strip-like thin glass plates to a bonding position, and the melting and bonding process is successively performed at the bonding position. This inevitably needs a complicated drive mechanism to rotate the holding member.

An additional disadvantage of the approach is that manufacturing efficiency is decreased since the corner parts of the frame-like and strip-like thin glass plates are heated and molten one by one.

The approach has a further disadvantage. In the approach, the frame-like and strip-like thin glass plates are held in the vertical direction. Accordingly, when the corner part is heated and molten, molten glass vertically hangs down by gravity. This produces a variation in the curvature shape of the bonded portion and hence, products quality is deteriorated.

Accordingly, an object of the present invention is to provide a method and apparatus for manufacturing a glass frame, which do not need a complicated drive mechanism and are capable of efficiently manufacturing a glass frame of high quality, and a method for bonding strip-like glass plates.

According to one aspect of the present invention there is provided a method for manufacturing a glass frame, comprising: storing a plurality of strip-like glass plates in a rectangular frame-shaped storage recess formed in a mold in a state that both end portions of the strip-like glass plates are overlapped; simultaneously heating and melting the overlapped end portions of the plurality of strip-like glass plates stored therein; and simultaneously pressing the molten, overlapped end portions of the plurality of strip-like glass plates to bond together the overlapped end portions so as to have a thickness equal to that of the strip-like glass plates.

According to anther aspect of the present invention there is provided apparatus for manufacturing a glass frame, comprising: a mold having a rectangular frame-shaped storage recess in which both end portions of the strip-like glass plates are stored such that they are overlapped; a heating unit which simultaneously heats and melts the end portions of the plurality of strip-like glass plates stored in the storage recess of the mold; and a pressing unit which simultaneously presses the end portions of the plurality of strip-like glass plates molten by the heating unit such that the resultant has a thickness equal to that of the strip-like glass plates.

According to anther aspect of the present invention there is provided a method for bonding strip-like glass plates, comprising: cutting end portions of first and second strip-like glass plates to form first and second inclined faces so as to form two sides of a triangle; cutting the end portion of the first strip-like glass plate in a predetermined width in parallel to the first inclined surface thereby to form a cut face; cutting the end portion of the second strip-like glass plate in a predetermined width in parallel to the second inclined surface thereby to form a cut face; and holding the first and second strip-like glass plates in a same vertical plane, locating the cut faces of the end portions thereof on and along a horizontal plane and in the lower part as viewed in the vertical direction, and overlapping the end portions by a predetermined width; and heating and melting, and pressing the overlapped end portions of the first and second strip-like glass plates to bond the end portions together.

### Brief Description of Drawings

FIG. 1 is a perspective view showing an outer appearance of an SED according to an embodiment of the present invention.
FIG. 2 is a cross sectional view of the SED taken on line II-II in FIG. 1.
FIG. 3 is an enlarged view showing a part of the cross section of FIG. 2.
FIG. 4 is a perspective view showing an outer appearance of an apparatus for manufacturing a glass frame to be assembled into the SED.
FIG. 5 is a plan view showing a mold of the manufacturing apparatus.
FIG. 6A is a cross sectional view showing a part of a pressing unit of the same apparatus.
FIG. 6B is a cross sectional view showing a part of a mold of the same apparatus.
FIG. 7 is a perspective view showing a strip-like glass plate as a component of the glass frame.
FIG. 8A is a view showing a state that the strip-like glass is stored in the mold.
FIG. 8B is a view showing a state that the strip-like glass is stored in the mold.
FIG. 9 is an enlarged view showing a part of the view of FIG. 8B.
FIG. 10 is a view showing a state of pressing a strip-like glass stored in the mold.
FIG. 11 is a perspective view showing a glass frame manufactured by the manufacturing apparatus.
FIG. 12A is a view showing a strip-like glass plate according to a second embodiment of the invention.
FIG. 12B is a view showing the strip-like glass plate being cut at the end.
FIG. 13A is a view showing the strip-like glass plate being further cut at the end.
FIG. 13B is a view showing a state that strip-like glass plates are overlapped at the end portions.
FIG. 14 is a view showing a state that the overlapped portion of the end portions of the strip-like glass plates is heated.
FIG. 15A is a view showing a pinch die for pressing the heated overlapped portion of the strip-like glass plates from both the sides.
FIG. 15B is a view showing a state that the heated overlapped portion of the strip-like glass plates is pressed from both the sides by the pinch die.
FIG. 15C is a view showing a protrusion of the pinch die.
FIG. 16 is a view showing a bonding state of conventional strip-like glass plates.
FIG. 17 is a view showing a bonded portion of the strip-like glass plates bonded by a bonding method of the invention.
FIG. 18 is a front view showing an apparatus of manufacturing the glass frame.
FIG. 19 is a perspective view showing a glass frame manufactured by the manufacturing apparatus.

### Best Mode for Carrying Out the Invention

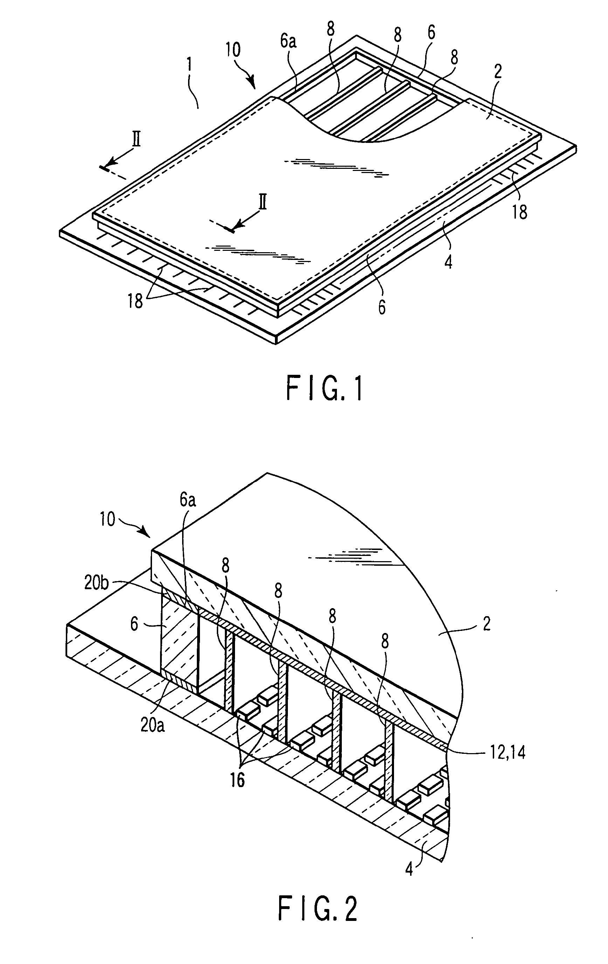

The embodiments of the present invention will be described with reference to the accompanying drawings. FIGS. 1 to 3 show a surface-conduction electron-emitter display (SED) 1 as a display device according to an embodiment of the invention.

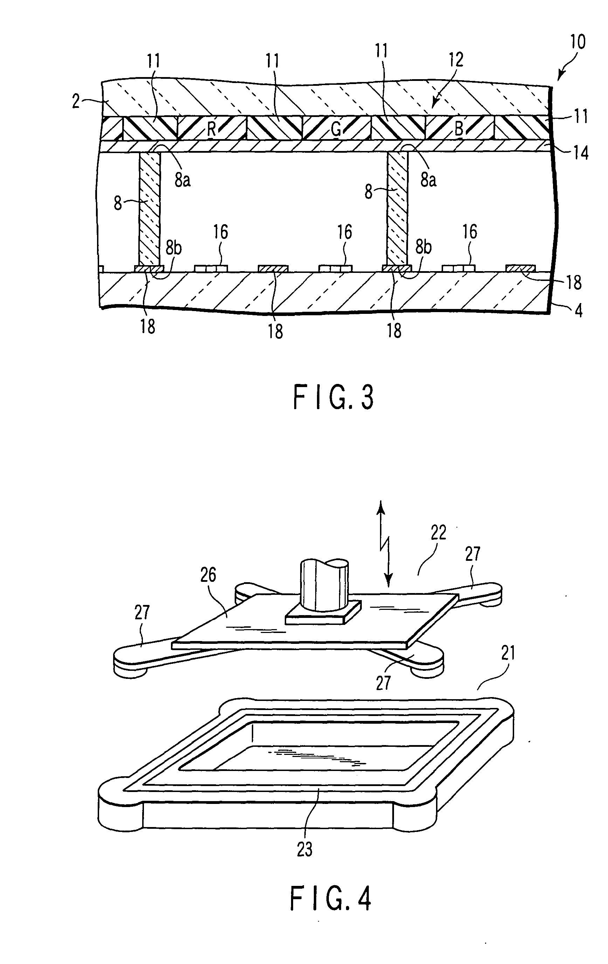

FIG. 1 is a perspective view showing a vacuum envelope 10 of the SED 1 in a state that a front substrate 2 is partially cut out. FIG. 2 is a cross sectional view showing the vacuum envelope 10 in FIG. 1 which is cut along line II-II. FIG. 3 is an enlarged view showing a part of the cross section of FIG. 2.

As shown in FIGS. 1 to 3, the SED 1 includes the front substrate 2 and a back substrate 4 each composed of a rectangular glass plate, which are oppositely arranged while being parallel to each other and spaced from each other at a gap of 1.0 to 2.0 mm. The back substrate 4 is larger than the front substrate 2. The front substrate 2 and the back substrate 4 are bonded along the peripheral edges with a rectangular frame-shaped side wall 6 of glass, located therebetween, to thereby form a vacuum envelope 10 the inside of which is vacuum, and which has a flat panel structure.

A fluorescent screen 12 serving as an image display panel is formed on the inner surface of the front substrate 2. The fluorescent screen 12 is formed such that red, blue and green fluorescent layers R, G and B and a light shielding layer 11 are arranged side by side. Those fluorescent layers are shaped like stripe or dots. A metal back 14 made of aluminum or the like is formed on the fluorescent screen 12.

A number of electron emission elements 16 of the surface conduction type for emitting electron beams are provided as electron emission sources for emitting electrons to excite the fluorescent layers of R, G and B of the fluorescent screen 12 to emit light, on the inner surface of the back substrate 4. Those electron emission elements 16 are arrayed to be a plurality of columns and a plurality of rows for each pixel, i.e., each of R, G and B fluorescent layers. The electron emission elements 16 are each formed with an electron emission unit (not shown), a pair of element electrodes for applying a voltage to the electron emission unit, and others. A number of wires 18 for applying a drive voltage to the electron emission elements 16 are provided in matrix on the inner surface of the back substrate 4, and the end portions of the wires are led out of the vacuum envelope 10.

The side wall 6 serving as a bonding member is sealed to the peripheral edges of the front substrate 2 and the back substrate 4 by a sealing material 20 of, for example, low melting glass or low melting metal, whereby those substrates are bonded together. In the embodiment, the back substrate 4 and the side wall 6 are bonded by using frit glass 20a, and the front substrate 2 and the side wall 6 are bonded by using indium 20b. If the back substrate 4 having the wires 18 and the side wall 6 are sealed to each other by using low melting metal, an insulating layer as an interlayer must be provided in order to avoid electric short which might occur between the wires 18 and the sealing material 20.

The SED 1 also includes a plurality of spacers 8 made of glass and shaped like narrow plates, which are located between the front substrate 2 an the back substrate 4. In the embodiment, the spacers 8 are formed with a plurality of narrow glass plates. If required, those may take the form of a grid of a rectangular metal plate (not shown) and a number of column-like spacers (not shown) raised from both sides of the grid.

Each spacer 8 has an upper end 8a which is brought into contact with the inner surface of the front substrate 2 through the metal back 14 and the light shielding layer 11 of the fluorescent screen 12, and a lower end 8b which is in contact with the wires 18 provided on the inner surface of the back substrate 4. The spacers 8 support atmospheric pressure loads acting thereon from outside the front substrate 2 and the back substrate 4 to thereby keep the space between the substrates at a fixed value.

The SED 1 further includes a voltage supply unit (not shown) for applying an anode voltage to between the metal back 14 of the front substrate 2 and the metal back 14. The voltage supply unit applies the anode voltage between the back substrate 4 and the metal back 14 such that, for example, a potential at the back substrate 4 is set at 0 V and a potential of the metal back 14 is at 10 kV.

To display an image by the SED 1, the voltage is applied to the element electrodes of the electron emission elements 16 through a drive circuit (not shown) connected to the wires 18 thereby to emit electron beams from the electron emission unit of the electron emission elements 16, and at the same time the anode voltage is applied to the metal back 14. The electron beams emitted from the electron emission unit are accelerated by the anode voltage, and impinge on the fluorescent screen 12. Consequently, the electron beams excite the fluorescent layers of R, G and B of the fluorescent screen 12 to cause the layers to emit light thereby to visually present a color image.

To manufacture the SED 1 with the structure stated above, a front substrate 2 having a fluorescent screen 12 and a metal back 14 is prepared in advance. Further, a back substrate 4 is also prepared in advance which has electron emission elements 16 and wires 18, and a side wall 6 and spacers 8 bonded thereto. The front substrate 2 and the back substrate 4 are placed in a vacuum chamber (not shown). The vacuum chamber is vacuumed, and the front substrate 2 is bonded to the back substrate 4 with the side wall 6 being located therebetween. In this way, an SED 1 having a plurality of spacers 8 is manufactured.

FIG. 4 is a perspective view showing an apparatus for manufacturing a glass frame to be used as the side wall 6 of the vacuum envelope of the SED.

The glass frame manufacturing apparatus includes a mold 21 serving as a rectangular frame, which is horizontally installed, and a pressing unit 22 which is movable to and from the mold 21.

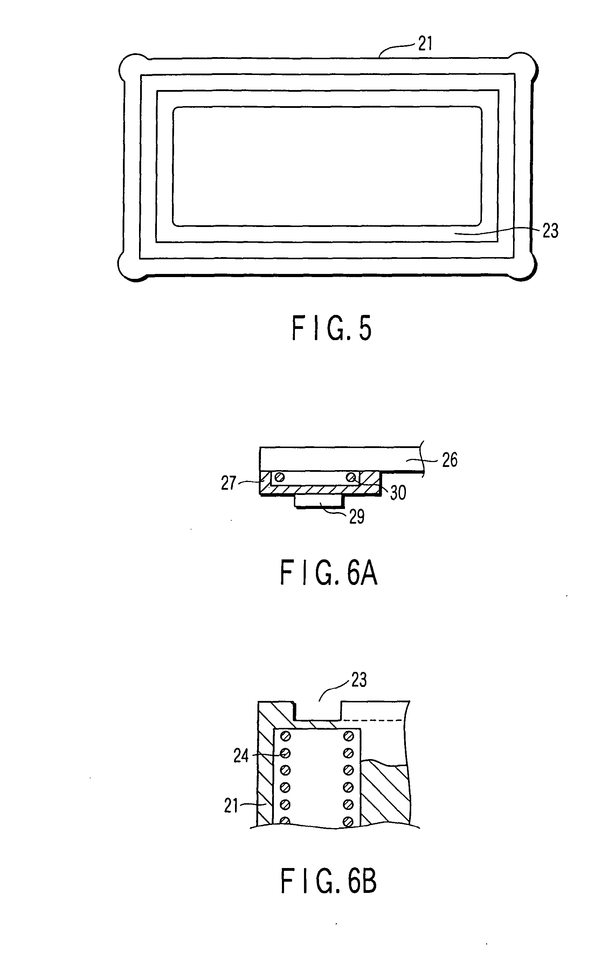

As shown in also FIG. 5, a storage recess 23 shaped like a rectangular frame is formed in the mold 21. As shown in also FIG. 6B, coil heaters 24 as heating units are located on the inner sides of the corners of the mold 1, respectively. Those coil heaters 24 are arranged on the lower parts of the corners of the storage recess 23 to heat the end portions of strip-like glass plates 31 and 32 to be overlapped at the end portions thereof as will be described later.

The pressing unit 22 includes a rectangular lift plate 26 as shown in FIG. 4, which is driven to move vertically by means of a drive mechanism (not shown). Arms 27 are mounted to the corners of the lift plate 26, respectively. Protrusions 29 for applying pressure, shown in also FIG. 6A, are protruded from the lower side of the distal end of each of the arms 27. Those protrusions 29 are to be fit into the corners of the storage recess 23 to press the heated and molten end portions of the strip-like glass plates, which will be described later. Heaters 30 for low temperature heating the protrusions 29 are provided on the inner sides of the distal end portions of the arms 27. By the heating of the protrusions 29, a temperature difference between the protrusions 29 and the end portions of the strip-like glass plates to be heated is reduced to thereby prevent the end portions of the strip-like glass plates from being deteriorated by the temperature difference.

A method of manufacturing the glass frame will be described hereunder.

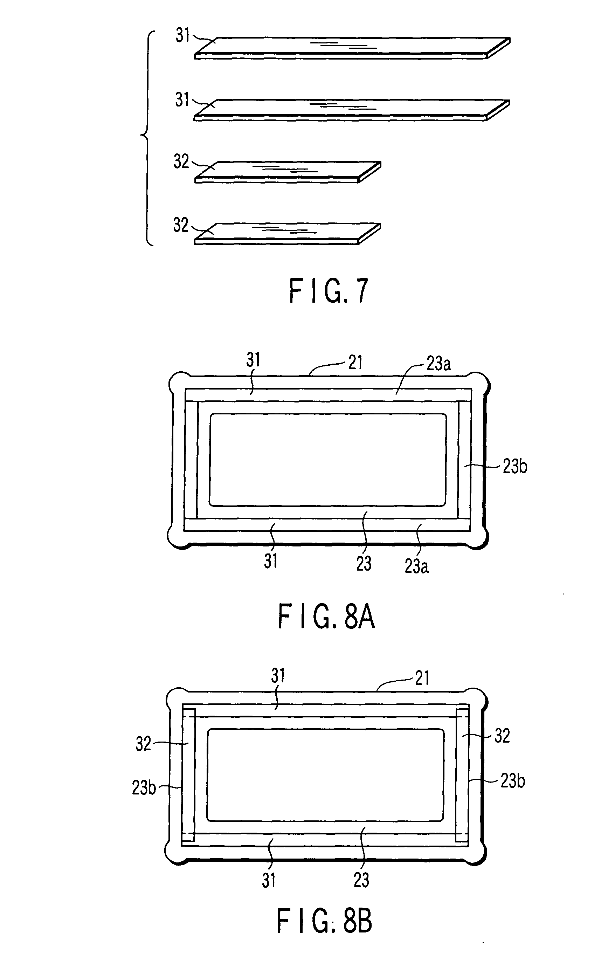

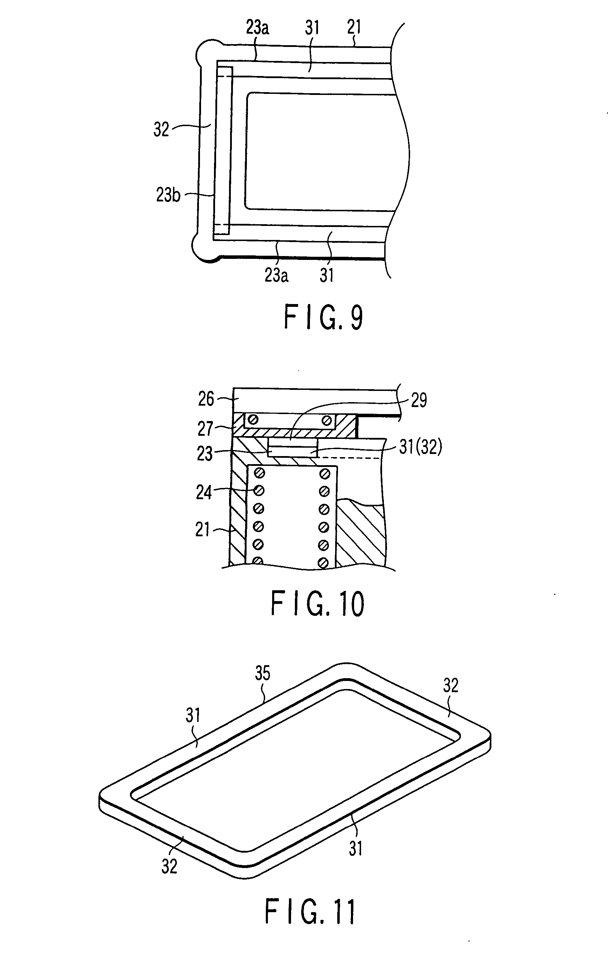

To start with, as shown in FIG. 7, two long strip-like glass plates 31 and two short strip-like glass plates 32 are prepared. As shown in FIG. 8A, the long strip-like glass plates 31 are stored along the inner sides of the long sides 23a of the storage recess 23 of the mold 21, respectively. Then, the short strip-like glass plates 32 are respectively stored along the inner sides of the short sides 23b in a state that the end portions of each short strip-like glass plate 32 overlap the end portions of the long strip-like glass plates 31 as shown in also FIG. 9.

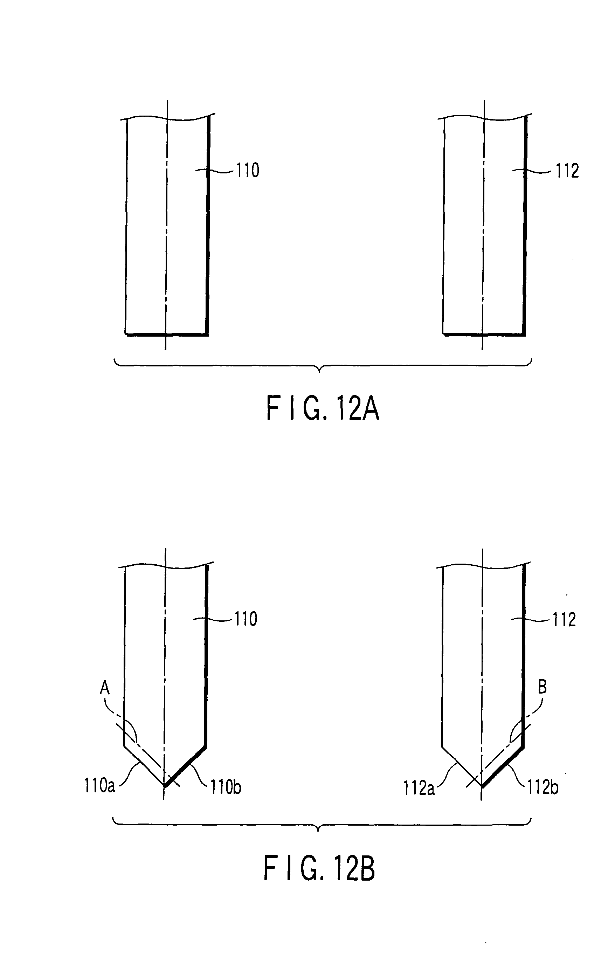

Following this, the coil heaters 24 in the mold 21 are fed with current. Consequently, the end portions of the strip-like glass plates 31 and 32, which are overlapped, are heated and molten. After the end portions are molten, the lift plate 26 is moved downward as shown in FIG. 10, so that fit their protrusions 29 for pressing are fit into the corners of the storage recess 23 thereby to press the molten end portions of the strip-like glass plates 31 and 32. As a result, the end portions of the strip-like glass plates 31 and 32 are bonded together to have a thickness of the glass, so that a glass frame 35 is manufactured as shown in FIG. 11.

As described above, according to the embodiment, the end portions of a plurality of strip-like glass plates 31 and 32 are concurrently pressed and molten to be bonded under pressure. Therefore, the manufacturing efficiency is remarkably increased when compared to the case where the end portions of the strip-like glass plates 31 and 32 are joined pair by pair.

Further, it is noted that there is no need of turning the plurality of strip-like glass plates 31 and 32 arranged in a frame shape. This feature eliminates the need of a complicated drive mechanism, and simplifies also the construction.

Additionally, it is noted that those strip-like glass plates 31 and 32 are heated and molten in a state that those are horizontally arranged. With this feature, there is no chance that the molten glass vertically hangs down, while it vertically hangs down when the strip-like glass plates 31 and 32 are held in the vertical direction. Consequently, no variation is caused in the curvature shape of the bonded portions, and hence, good products quality is kept good.

FIGS. 12A to 17 are views showing a method for bonding strip-like glass plates, which is a second embodiment of the invention.

As shown in FIG. 12A, two strip-like glass plates 110 and 112, each cut to have predetermined lengths, are first prepared. The strip-like glass plates are desirably strip-like glass plates, not bent, manufactured by, for example, a redrawing method, or strip-like thin glass plates into which a large size thin glass is cut, in order to keep a flatness of overall strip-like glass plates after those are bonded. Those strip-like glass plates 110 and 112 are equal in thickness (1.1 mm) and width (8 mm).

As shown in FIGS. 12B, the end portions of the strip-like glass plates 110 and 112 are each cut so as to form an equilateral triangle thereby to provide first and second inclined faces 110a and 110b, and 112a and 112b.

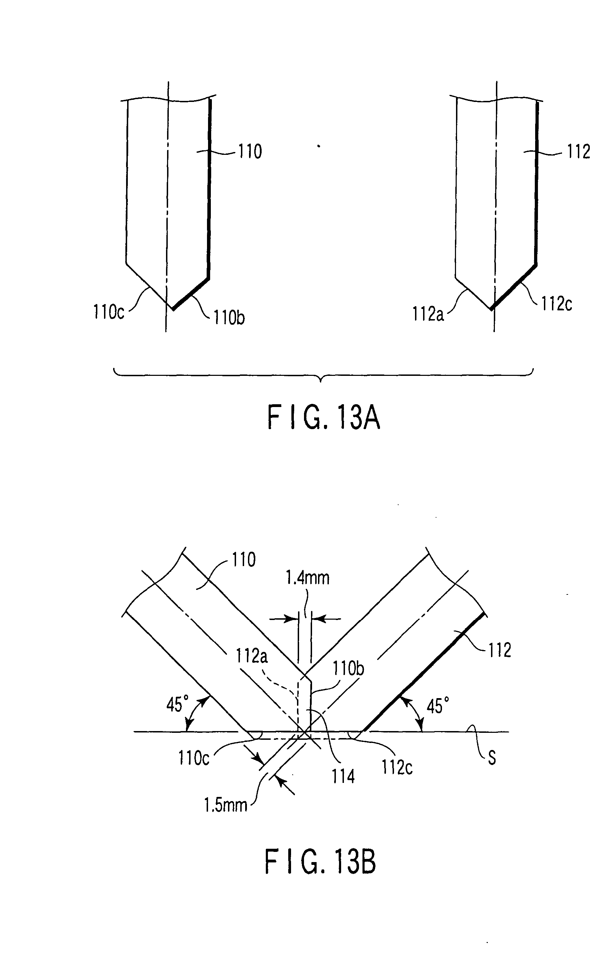

A cut face 110c is formed as shown in FIG. 13A by cutting the end of the first strip-like glass plate 110 along a line A, which extends in parallel to the first inclined face 110a and is located 1.5 mm inwardly from the first inclined face 110a.

A cut face 112c is formed by cutting the end of the second strip-like glass plate 112 along a line B, which extends in parallel to the second inclined face 110b and is located 1.5 mm inwardly from the second inclined face 110b.

Subsequently, the two strip-like glass plates 110 and 112 are held in a state that those are symmetrical with respect to the vertical line and slanted at angle of about 45° with respect to a horizontal surface S, as shown in FIG. 13B. At this time, the two strip-like glass plates 110 and 112 are held in a state that the cut faces 110c and 112c of the end portions of those plates are laid on and along the horizontal surface S, and located in the lower part as viewed in the vertical direction, so that the second inclined face 110b and the first inclined face 112a are overlapped by a predetermined amount of space (1.4 mm).

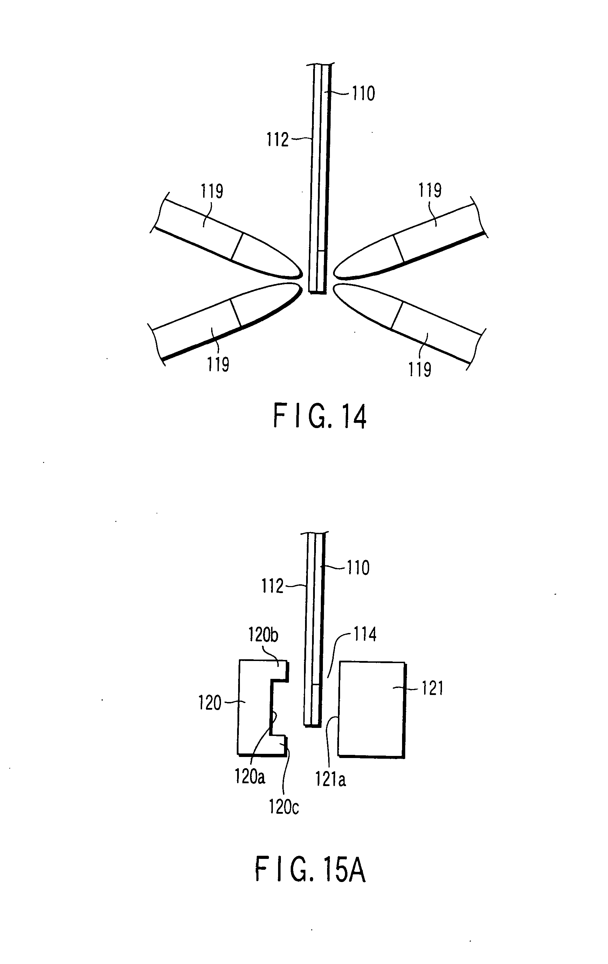

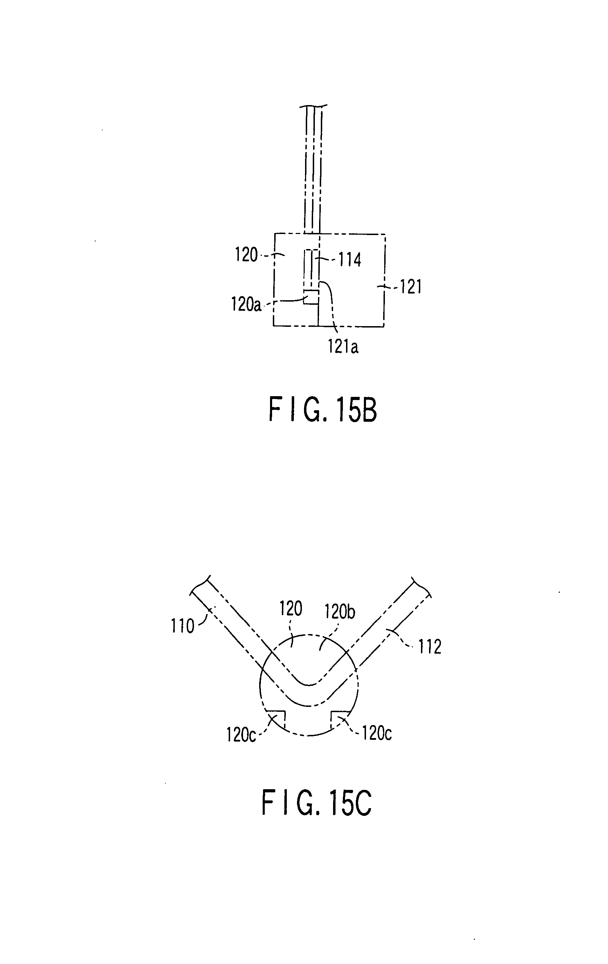

In this state, as shown in FIG. 14, the end portions of the strip-like glass plates 110 and 112 are heated from both sides by, for example, a burner 119 to be softened. After those end portions are softened, a pair of pinch dies 120 and 121 are located while being confronted with an overlapping part 114 of the strip-like glass plates 110 and 112, as shown in FIG. 15A. Then, as shown in FIG. 15B, the overlapping part 14 of the strip-like glass plates 110 and 112 is instantaneously pressed at least once from both sides.

By the pressing operation, the overlapping part 14 is molten and bonded, the bonded portion has a uniform thickness over its entirety, which is substantially equal to that of the strip-like glass plate, and further the bonded portions are flush with the surface of the strip-like glass plates.

The paired pinch dies 120 and 121 are shaped to be circular, and have flat pressing faces 120a and 121a, which are to be brought into contact with the overlapping part 14 of each of the strip-like glass plates 110 and 112. Protrusions 120b and 120c are protruded from the pressing face 120a of the pinch die 120, as shown in also FIG. 15C. Those pinch dies 120 and 121 are supported in a state that those are movable between a release position where those are separated from each other as shown in FIG. 15A, and a pressing position where the pressing faces 120a and 121a are confronted with each other with a space, located therebetween, being substantially equal to the thickness of the strip-like glass plates.

The pinch dies 120 and 121 are made of, for example, stainless or cast iron, and the surfaces of them are coated with a carbon layer or the like to which glass is hard to stick.

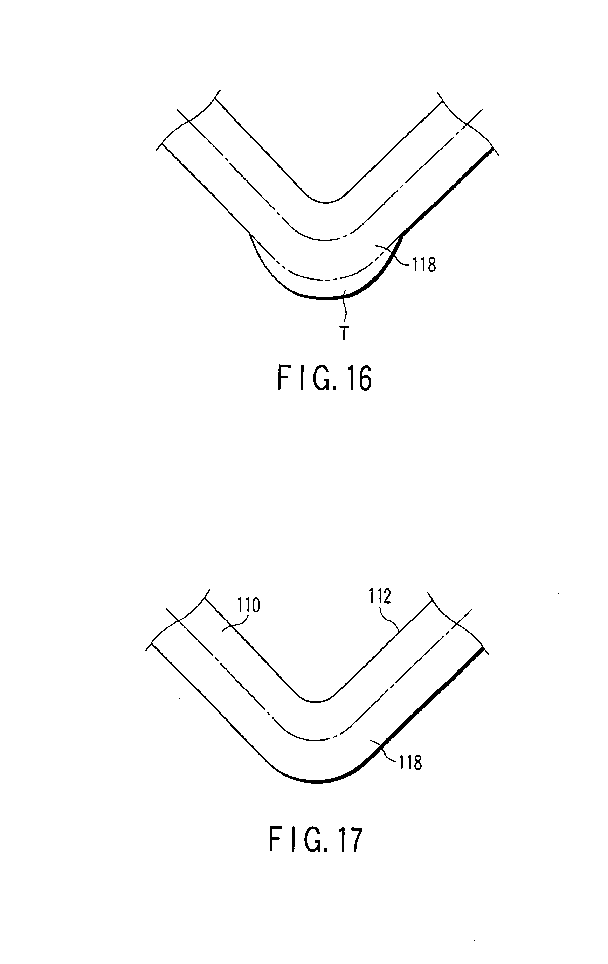

When the overlapping part 14 is heated and molten in a state that the strip-like glass plates 110 and 112 are held while being raised with their surfaces being located on the vertical plane, the softened glass located in the lower part as viewed in the vertical direction hangs down by gravity, as described above. As a result, a hanging portion T is formed as shown in FIG. 16, and a variation is possibly caused in the curvature form of a corner 118 of the strip-like glass plates having been bonded.

It is noted that in the bonding method according to the present embodiment, the lower end portions of the strip-like glass plates 110 and 112 as viewed in the vertical direction are cut as shown in FIG. 13A, and then those end portions are overlapped as shown in FIG. 13B, and heated and softened. Therefore, the hanging portion is reduced by an amount corresponding to the cut part amount. The result is that a bonding part being uniform in thickness and curvature form is produced.

Description will be given hereunder about a method and apparatus for manufacturing a frame-shaped glass frame which is to be applied to the side wall of the FED.

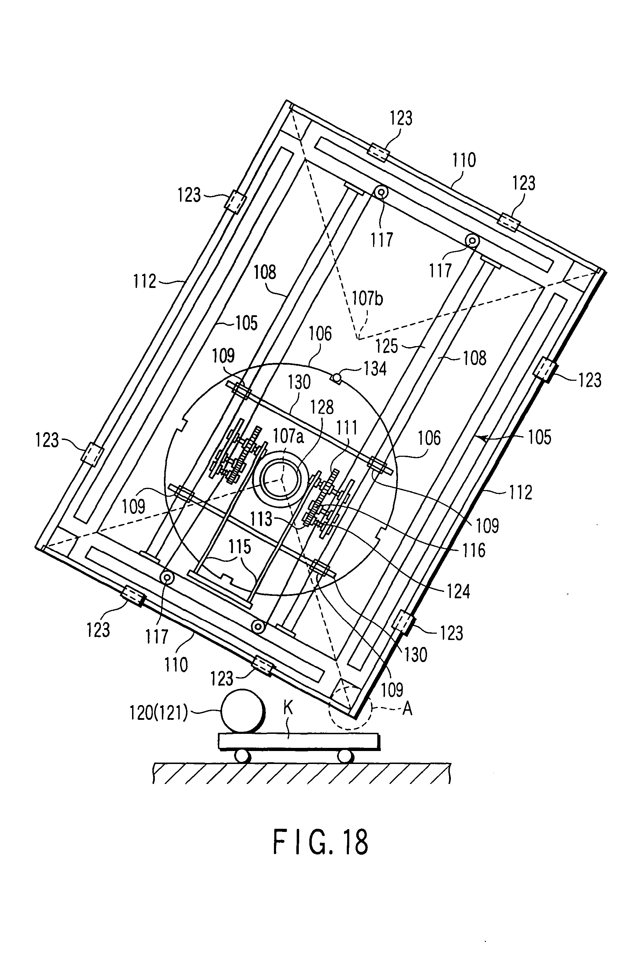

FIG. 18 shows an apparatus for manufacturing a glass frame.

The manufacturing apparatus includes a rotary base 106 which is rotatable about a horizontal center axis 128 and a substantially rectangular frame 105 which is supported by and located in a vertical plane of the rotary base 106. The rectangular frame 105 serving as a glass plate holder is assembled by using angle bars made of light metal, such as aluminum. Strip-like glass plates 110 and 112 having been cut to have lengths exactly equal to the long and short sides of the glass frame are set in rectangular form on the side edges of the rectangular frame 105 by means of fittings 123 with magnets. At this time, the strip-like glass plates 110 and 112 are set such that the end portions of the adjacent glass plates are overlapped in a state that those glass plates are arranged at a right angle as shown in FIG. 13B.

A burner 119 shown in FIG. 14 and a pair of pinch dies 120 and 121 shown in FIG. 15A are located at a bonding position denoted by characteristic symbol A in FIG. 18. Those and the rectangular frame 105 form a bonding device. The paired pinch dies 120 and 121 are reciprocatively movable between the bonding position and a standby position, while being carried on a carrier K.

When a rectangular glass frame is formed by bonding, at each overlapping part, the strip-like glass plates 110 and 112 set in the rectangular frame 105, it is efficient and favorable also for automating that the bonding parts of the four corners are subjected to bonding work at the bonding position A. In a case where the glass frame square, if the rectangular frame 105 in which the strip-like glass plates having been set is rotated about a center as the intersection of its diagonals, the corners of the glass frame are successively moved to one bonding position A and bonded thereat.

In the case of the glass frame being rectangular, different rotation centers 107a and 107b must be provided for two sets of the corners. To make the work at one bonding position A, the rectangular frame 105 carrying the strip-like glass plates is parallel moved with respect to the rotary base 106, and the two rotation center positions are switched to one from the other and vice versa.

To this end, the rectangular frame 105 is provided with two support rods 108 extending in parallel to its long sides. Those support rods 108 are slidably supported by a pair of support frames 130 fixed to the rotary base 106, with four bearings 109 being interposed therebetween. With the structure, the rectangular frame 105 is supported in state that it is movable in parallel to and along the long sides thereof. The support rods 108 and the support frames 130 form a sliding mechanism.

Accordingly, one set of the corners are subjected to the bonding work after the rotary base 106 is turned by 45°, while the other set of the corners are subjected to the bonding work after the rectangular frame 105 is moved in parallel to adjust the rotation enter position, and thereafter the rotary base 106 is turned. In this way, the bonding work for four corners is done at one bonding position A.

The switching operation of the rotation center position of the rectangular frame 105 by the movement, i.e., the translation of the rectangular frame 105, is performed in a manner that a switch handle 115 is turned to one side to drive gears 111, 116 and 113 and a cable 125 stretched via four pulleys 117 on the rectangular frame 105 is taken up by pulleys 124 interlocked with the gear 113.

To manufacture the glass frame, as shown in FIG. 18, the rectangular frame 105 is adjusted such that a rotation center 107a becomes coincident with the center axis 128 of the rotary base 106, and then the rotary base 106 is rotated such that the corner to be joined is positioned at the bonding position A. A stopper 134 is inserted in one of recesses that are formed in the end face of the rotary base 106 while being spaced at angular intervals of 90° to thereby fix the rotary base 106 and the rectangular frame 105.

At the bonding position A, the strip-like glass plates 110 and 112 are arranged such that the cut faces 110c and 112c of the end portions of those glass plates are put on a horizontal surface S and positioned on the lower side as viewed in the vertical direction, as shown in FIGS. 13A and 13B. In this state, those are heated from both sides thereof by the burner 119 to be softened, and then, the bonding portion is pressed from both sides by the pair of pinch dies 120 and 121. When the bonding portion is not formed as desired by one pressing operation, the heating and softening process, and the instantaneous pressing operation may be repeated appropriately.

After the bonding work for one corner is completed, the stopper 134 is removed and the rotary base 106 is turned 90°, and another corner is set at the bonding position A. After the rotary base 106 and the vacuum envelope 105 are fixed by the stopper 134, the bonding work for another corner is performed.

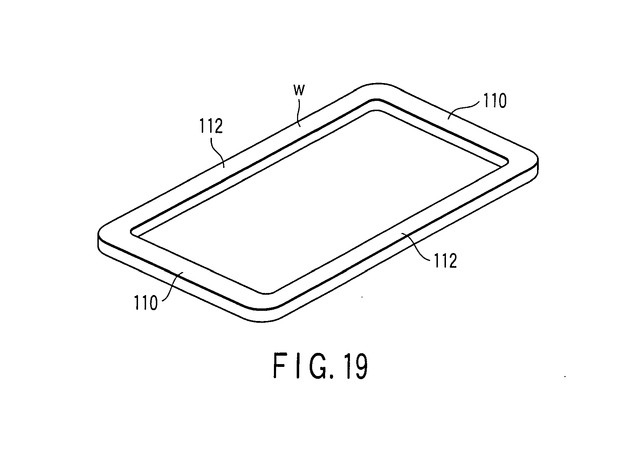

To melt and bond one set of the corners forming the glass frame, the switch handle 115 is turned to the other side, and the rectangular frame 105 is translated until the rotation center 107b of the rectangular frame 105 is coincident with the center axis 128 of the rotary base 106. After the adjustment of the rotation center, the bonding work is applied to the two corners at the bonding position A in the same manner as described above. As a result, a rectangular thin glass frame W is completed as shown in FIG. 19.

According to the method and apparatus for manufacturing the glass frame configured as described above, the amount of molten glass hanging is reduced at the corners of the glass frame, and as shown FIG. 17, the bonding part having uniform thickness and curvature shape is obtained.

It should be understood that the present invention is not limited to the embodiments mentioned above. The constituent components in the embodiments may be modified, changed, and altered within the scope of the present invention. It is evident that appropriate combinations of the constituent components will create various inventions. For example, some of the constituent components may be removed from all of those components in the embodiments. Further, the constituent components of different embodiments may be appropriately combined.

### Industrial Applicability

According to the present invention, it is possible to efficiently manufacture a glass frame of high quality with a simple construction.

## Claims

1. A method for manufacturing a glass frame, comprising:
storing a plurality of strip-like glass plates in a rectangular frame-shaped storage recess formed in a mold in a state that both end portions of the strip-like glass plates are overlapped;
simultaneously heating and melting the overlapped end portions of said plurality of strip-like glass plates stored therein; and
simultaneously pressing the molten, overlapped end portions of said plurality of strip-like glass plates to bond together the overlapped end portions so as to have a thickness equal to that of the strip-like glass plates.

2. Apparatus for manufacturing a glass frame, comprising:
a mold having a rectangular frame-shaped storage recess in which both end portions of the strip-like glass plates are stored such that they are overlapped;
a heating unit which simultaneously heats and melts the end portions of said plurality of strip-like glass plates stored in the storage recess of the mold; and
a pressing unit which simultaneously presses the end portions of said plurality of strip-like glass plates molten by the heating unit such that the resultant has a thickness equal to that of the strip-like glass plates.

3. The glass frame manufacturing apparatus according to claim 2, wherein the mold is horizontally installed.

4. The glass frame manufacturing apparatus according to claim 2, wherein the heating unit is constituted by a plurality of heaters located at the corners of the mold.

5. The glass frame manufacturing apparatus according to claim 2, wherein the pressing unit has pressing protrusions for pressing the molten end portions of the strip-like glass plates when the protrusions are fit into the corners of the storage recess.

6. The glass frame manufacturing apparatus according to claim 2, wherein the heating unit has heaters which heat the pressing protrusions.

7. A method for bonding strip-like glass plates, comprising:
cutting end portions of first and second strip-like glass plates to form first and second inclined faces so as to form two sides of a triangle;
cutting the end portion of the first strip-like glass plate in a predetermined width in parallel to the first inclined surface thereby to form a cut face;
cutting the end portion of the second strip-like glass plate in a predetermined width in parallel to the second inclined surface thereby to form a cut face; and
holding the first and second strip-like glass plates in a same vertical plane, locating the cut faces of the end portions thereof on and along a horizontal plane and in the lower part as viewed in the vertical direction, and overlapping the end portions by a predetermined width; and
heating and melting, and pressing the overlapped end portions of the first and second strip-like glass plates to bond the end portions together.

8. The strip-like glass plates bonding method according to claim 7, wherein the first and second strip-like glass plates are symmetrical with respect to a vertical line, and are held slanted at an angle of about 45° with respect to a horizontal plane.

9. The strip-like glass plates bonding method according to claim 7, wherein the width of each of the first and second strip-like glass plates is 8 mm, and the height thereof is 1.1 mm.

10. The strip-like glass plates bonding method according to claim 9, wherein the cut width of each of the first and second strip-like glass plates is 1.5 mm, and the overlapping width thereof is 1.4 mm.

11. A method for bonding strip-like glass plates, comprising:
cutting end portions of first and second strip-like glass plates to form first and second inclined faces so as to form two sides of a triangle;
cutting the end portion of the first strip-like glass plate in a predetermined width in parallel to the first inclined surface thereby to form a cut face;
cutting the end portion of the second strip-like glass plate in a predetermined width in parallel to the second inclined surface thereby to form a cut face; and
arranging the first and second strip-like glass plates in the form of a frame in a same vertical plane, and overlapping the end portions of the first and second strip-like glass plates by a predetermined width;
successively moving the overlapped end portions of the first and second strip-like glass plates such that the cut faces thereof are laid along a horizontal plane and the overlapped end portions are positioned at the lower part as viewed in the vertical direction, and heating and melting, and pressing the overlapped end portions at the position to which the end portions are moved to thereby bond the end portions together.

12. The strip-like glass plates bonding method according to claim 11, wherein, when moved to at the position to which the end portions are moved, the first and second strip-like glass plates are symmetrical with respect to a vertical line, and are held slanted at an angle of about 45° with respect to a horizontal plane.

13. The strip-like glass plates bonding method according to claim 11, wherein the width of each of the first and second strip-like glass plates is 8 mm, and the height thereof is 1.1 mm.

14. The strip-like glass plates bonding method according to claim 11, wherein the cut width of each of the first and second strip-like glass plates is 1.5 mm, and the overlapping width thereof is 1.4 mm.
